# EUROPÄISCHE PATENTSCHRIFT

(11) **EP 3 269 975 B1**
(45) Veröffentlichungstag und Bekanntmachung des Hinweises auf die Patenterteilung: **07.08.2019**
(21) Anmeldenummer: 17185966.3
(22) Anmeldetag: 17.09.2008
(51) Int. Cl.: F03D 7/00, F03D 7/04, G06F 9/44

(54) **VERFAHREN UND ANORDNUNG ZUM AUTOMATISCHEN ERNEUERN EINER STEUERUNGSSOFTWARE EINER WINDENERGIEANLAGE**
METHOD AND ASSEMBLY FOR UPDATING OF A CONTROL SOFTWARE WITH A WIND TURBINE
PROCÉDÉ ET DISPOSITIF DE RENOVER D'UN LOGICIEL DE COMMANDE AVEC UNE ÉOLIENNE

(30) Priorität: 21.09.2007 DE 102007045070
(43) Veröffentlichungstag der Anmeldung: 17.01.2018
(62) Teilanmeldung aus: 08016400.7
(73) Patentinhaber: Senvion GmbH, 22297 Hamburg (DE)
(72) Erfinder: Altemark, Jens, 24768 Rendsburg (DE); Book, Markus, 24118 Kiel (DE); Kupper, Anton, 25746 Heide (DE)
(74) Vertreter: Glawe, Delfs, Moll

(56) Entgegenhaltungen:
- EP-A2- 1 788 478
- US-A1- 2003 159 135
- US-A1- 2005 090 937

## Beschreibung

Die Erfindung betrifft ein Verfahren und eine Anordnung zum automatischen Erneuern der Steuerungssoftware einer Windenergieanlage. Windenergieanlagen werden mit einer Steuerungssoftware betrieben, die das Zusammenspiel der Komponenten innerhalb der Windenergieanlage sowie das Zusammenspiel der Windenergieanlage mit dem Anschlussnetz steuert. Die Steuerungssoftware muss die Randbedingungen beachten, unter denen die Windenergieanlage arbeitet. Es muss berücksichtigt werden, mit welchen Komponenten die Windenergieanlage ausgestattet ist, welche Spannungen zulässig sind, mit welchen Leistungen die Windenergieanlage betrieben werden darf, welche Eigenfrequenz der Turm der Windenergieanlage hat, in welcher Betriebsart der Schallausstoß der Windenergieanlage am geringsten ist und so weiter. Alle diese Randbedingungen sind durch Betriebsparameter der Windenergieanlage definiert. Die Betriebsparameter werden von der Steuerungssoftware berücksichtigt.

Von Zeit zu Zeit wird die Steuerungssoftware einer Windenergieanlage durch eine neue Version der Steuerungssoftware ersetzt. Nach klassischem Ablauf steuert eine Bedienperson von einer Leitstelle aus die einzelnen Windenergieanlagen nacheinander über eine Datenleitung an, überträgt die neue Version der Software zu jeder einzelnen Windenergieanlage und installiert die Software durch manuell eingegebene Befehle. Das Erneuern der Software nimmt bei jeder Windenergieanlage etwa 1,5 Stunden in Anspruch. Durch die von der Bedienperson aufgewendete Zeit und den Stillstand der Windenergieanlage entstehen erhebliche Kosten.

Aus EP 1 788 478 A2 ist ein Verfahren zum automatischen Erneuern der Steuerungssoftware einer Mehrzahl von Windenergieanlagen bekannt. Die neue Version der Steuerungssoftware wird dort einmal von einer Leitstelle aus zu einem Parkmaster übertragen, an den eine Mehrzahl von Windenergieanlagen angeschlossen ist. Der Parkmaster steuert die einzelnen Windenergieanlagen nacheinander an und überträgt die neue Version der Steuerungssoftware zu den Windenergieanlagen. Auf diese Weise wird die zwischen der Leitstelle und dem Parkmaster übertragene Datenmenge reduziert. Dies bringt eine erhebliche Zeitersparnis, da die Datenleitung zwischen der Leitstelle und dem Parkmaster in vielen Fällen nur für eine geringe Übertragungsrate ausgelegt ist.

Das Verfahren gemäß EP 1 788 478 A2 zeigt seine Vorzüge dann, wenn alle an den Parkmaster angeschlossenen Windenergieanlagen mit identischen Betriebsparametern betrieben werden. Die Steuerungssoftware kann dann für die betreffenden Betriebsparameter ausgelegt sein und nacheinander ohne weitere Anpassungen auf die einzelnen Windenergieanlagen aufgespielt werden.

Die Voraussetzung, dass alle an den Parkmaster angeschlossenen Windenergieanlagen mit denselben Betriebsparametern betrieben werden, ist jedoch nicht immer gegeben. Dies gilt auch dann, wenn die Windenergieanlagen grundsätzlich vom gleichen Bautyp sind. Beispielsweise können sich die Windenergieanlagen in ihren Komponenten unterscheiden, wie etwa den Generatoren oder den Getrieben. Eine auf der Kuppe eines Hügels angeordnete Windenergieanlage kann mit einer anderen Gefahrbefeuerung ausgestattet sein als eine am Hang angeordnete Windenergieanlage.

Variationen dieser Art können dazu führen, dass sich die Betriebsparameter der Windenergieanlage unterscheiden. Es kann sein, dass an der neuen Version der Steuerungssoftware Anpassungen erforderlich sind, damit sie bei einer Windenergieanlage mit abweichenden Betriebsparametern verwendet werden kann.

In dem Verfahren gemäß EP 1 788 478 A2 müssen die Windenergieanlagen, die mit abweichenden Betriebsparametern betrieben werden, manuell ausgesondert werden. Der Parkmaster muss angewiesen werden, diese Windenergieanlagen beim automatischen Erneuern der Steuerungssoftware zu überspringen. Dies ist umständlich und birgt ein hohes Potential für Fehler, da möglicherweise nicht alle abweichenden Windenergieanlagen erkannt werden.

Zu Problemen mit der Kompatibilität der Steuerungssoftware kann es nicht nur dann kommen, wenn die Steuerungssoftware erneuert wird, sondern auch dann, wenn zwar die Steuerungssoftware erhalten bleibt, sich jedoch die Betriebsparameter der Windenergieanlage ändern. Die Betriebsparameter einer Windenergieanlage können sich beispielsweise dann ändern, wenn ein Mechaniker die Windenergieanlage wartet und dabei Einstellungen vornimmt, die sich auf die Betriebsparameter auswirken. Bislang muss der Mechaniker aufwändig von Hand prüfen, ob die geänderten Einstellungen zu Problemen in Hinblick auf die Kompatibilität der Steuerungssoftware führen.

Der Erfindung liegt ausgehend vom eingangs beschriebenen Stand der Technik die Aufgabe zu Grunde, ein Verfahren und eine Anordnung zum Erneuern einer Steuerungssoftware mit einer Windenergieanlage vorzustellen, die die Abläufe beim Erneuern der Steuerungssoftware sowie beim Warten von Windenergieanlagen erleichtern. Die Aufgabe wird gelöst durch die Merkmale der unabhängigen Ansprüche. Vorteilhafte Ausführungsformen finden sich in den Unteransprüchen.

Zunächst werden einige Begriffe erläutert. Ein Betriebsparameter einer Windenergieanlage ist jeder Parameter, der eine Eigenschaft einer Windenergieanlage in einer Form repräsentiert, die eine Verarbeitung durch eine Steuerungssoftware ermöglicht. Die Betriebsparameter umfassen Konstanten, Kennlinien, mathematische Funktionen, Wertetabellen, Seriennummern oder Typidentifikationen der Windenergieanlage oder ihrer Komponenten.

Wenn eine Steuerungssoftware Parameter verarbeitet, so müssen die Parameter vorbestimmte Werte haben oder innerhalb vorbestimmter Bereiche liegen, damit die Steuerungssoftware in der vorgesehenen Weise arbeitet. Beim Erstellen der Steuerungssoftware wird angegeben, für welche Standardparameter die Steuerungssoftware bestimmt ist, welches also die Standardparameter der Steuerungssoftware sind. Arbeitet eine Steuerungssoftware mit Parametern, die nicht Standardparameter sind, so kann dies je nach Schwere der Abweichungen zu einem fehlerhaften Betrieb der Windenergieanlage führen.

Das erfindungsgemäße Verfahren hat den Vorteil, dass es den Aufwand und damit die Kosten gering hält. Mit den Standardparametern und den Betriebsparametern müssen nur geringe Datenmengen zu der Recheneinheit übertragen werden. Das Feststellen von Abweichungen zwischen den Betriebsparametern und den Standardparametern kann von der Recheneinheit in einer standardisierten Prozedur durchgeführt werden. Eine Mehrzahl von bislang manuell durchgeführten Schritten wird durch das erfindungsgemäße Verfahren eingespart. Die Gefahr von unter Umständen schwerwiegenden Fehlern des Bedienpersonals wird vermindert.

Damit eine automatische Durchführung der Kompatibilitätsprüfung beispielsweise durch ein Logikmodul möglich ist, müssen Kriterien vorgegeben sein, anhand derer über die Kompatibilität entschieden wird. Im einfachsten Fall ist das Ergebnis der Kompatibilitätsprüfung nur dann positiv, wenn alle Betriebsparameter zu den Standardparametern passen. Jede Abweichung führt zu einem negativen Ergebnis der Kompatibilitätsprüfung. Es gibt Fälle, in denen die Steuerungssoftware trotz einer Abweichung zwischen den Betriebsparametern und Standardparametern mit der Windenergieanlage kompatibel ist. Die Effizienz des erfindungsgemäßen Verfahrens wird verbessert, wenn Kriterien vorgegeben werden, anhand derer automatisch entschieden werden kann, ob trotz einer Abweichung noch Kompatibilität gegeben ist. Solche Kriterien können in Form von Kompatibilitätsklassen, die den Standardparametern zugeordnet werden, vorgegeben werden. Anhand der Kompatibilitätsklassen kann entsprechend der Schwere der Abweichung differenziert reagiert werden.

Beispielsweise können den Standardparametern vier Kompatibilitätsklassen zugeordnet sein: In der ersten Kompatibilitätsklasse wird die Steuerungssoftware trotz einer Abweichung ohne Rückfrage aufgespielt. In der zweiten Kompatibilitätsklasse wird die Steuersoftware ebenfalls ohne Rückfrage aufgespielt, es erfolgt jedoch eine Meldung an eine Leitstelle. In der dritten Kompatibilitätsklasse führt eine Abweichung dazu, dass die Steuerungssoftware nur nach einem ausdrücklichen Befehl der Leitstelle aufgespielt werden kann. In der vierten Kompatibilitätsklasse ist die Steuerungssoftware bei einer Abweichung nicht kompatibel.

Das Verfahren kann bei einer Version der Steuerungssoftware angewendet werden, mit der die Windenergieanlage zuvor bereits betrieben wurde, also bei einer aktiven Version der Steuerungssoftware. Dies kommt etwa dann in Betracht, wenn sich die Betriebsparameter einer Windenergieanlage nach Wartungsarbeiten geändert haben. Ein anderer Anlass für eine Kompatibilitätsprüfung nach dem erfindungsgemäßen Verfahren kann es sein, dass die Windenergieanlage erstmalig mit einer neuen Version der Steuerungssoftware in Betrieb genommen werden soll. In beiden Fällen wird eine Vielzahl von Schritten eingespart, die bislang manuell durchgeführt werden.

Es können mehrere Versionen der neuen Software vorgesehen sein. Das Logikmodul kann dann anhand der Betriebsparameter eine Version der neuen Software auswählen, bei der die Standardparameter und die Betriebsparameter zusammenpassen.

Die Steuerungssoftware kann so ausgelegt sein, dass einzelne oder alle Standardparameter einen exakt bestimmten Wert haben müssen. So kann es beispielsweise sein, dass eine Steuerungssoftware nur mit einem bestimmten Typ von Transformator oder einem bestimmten Typ von Umrichter zusammenarbeiten kann.

Ebenfalls möglich ist es, dass es für die Steuerungssoftware ausreichend ist, wenn die Betriebsparameter innerhalb bestimmter Bereiche liegen. Dies kann etwa für die in den Komponenten der Windenergieanlage maximal zulässige Spannung gelten. Die Standardparameter umfassen dann Parameterbereiche.

Es kann vorkommen, dass verschiedene Betriebsparameter der Windenergieanlage im Steuerungsprogramm eine Abhängigkeit voneinander haben. So kann etwa in einem ersten Getriebetyp eine bestimmte Temperatur noch zulässig sein, während bei einem zweiten Getriebetyp der Grenzwert der zulässigen Temperatur bereits überschritten ist. Solchen Abhängigkeiten kann dadurch Rechnung getragen werden, dass die Standardparameter durch eine Standardparametermatrix repräsentiert sind.

Das erfindungsgemäße Verfahren zum Feststellen der Kompatibilität der Steuerungssoftware kann Element eines Verfahrens sein, mit dem die Steuerungssoftware einer Windenergieanlage erneuert wird. Es wird dann bei positivem Ergebnis der Kompatibilitätsprüfung eine neue Version der Steuerungssoftware zu der Windenergieanlage übertragen und die Windenergieanlage wird mit der übertragenen Steuerungssoftware in Betrieb genommen. Das Verfahren zum Erneuern der Steuerungssoftware kann automatisch durchgeführt werden. Bei einer positiven Entscheidung über die Kompatibilität wird dann ein Signal an eine Kontrolleinheit übermittelt, gemäß dem das Übertragen der Steuerungssoftware automatisch in Gang gesetzt wird.

Während des Übertragens der Steuerungssoftware zu der Windenergieanlage kann die Windenergieanlage außer Betrieb gesetzt werden. Zwingend ist dies jedoch nicht, vielmehr kann die Windenergieanlage währenddessen auch noch mit der alten Version der Steuerungssoftware weiterbetrieben werden.

In einer vorteilhaften Ausführungsform wird die Windenergieanlage auch dann nicht außer Betrieb gesetzt, wenn die Steuerungssoftware auf der Windenergieanlage installiert wird und wenn die Steuereinheit der Windenergieanlage von der alten Version der Steuerungssoftware auf die neue Version der Steuerungssoftware umgeschaltet wird. Dazu wird die neue Version der Software zunächst in einem passiven Speicherbereich der Steuereinheit installiert. Ist die Installation im passiven Speicherbereich vollendet, so kann die Steuereinheit mittels eines Umschaltmoduls instantan so umgeschaltet werden, dass der passive Speicherbereich zum aktiven Speicherbereich wird, ohne dass die Windenergieanlage außer Betrieb gesetzt werden muss. Gegebenenfalls kann eine separate Sicherheitseinrichtung vorgesehen sein, die die Windenergieanlage während des Umschaltens und nach dem Umschalten überprüft und die die Steuereinheit wieder zum vormals aktiven Speicherbereich zurückschaltet, wenn sie Unregelmäßigkeiten beim Betrieb mit der neuen Version der Steuerungssoftware feststellt. Sind die Unregelmäßigkeiten derart, dass sie auch durch ein Zurückschalten auf die alte Version der Steuerungssoftware nicht behoben werden können, so kann die Sicherheitseinrichtung einen Notstopp der Windenergieanlage in die Wege leiten. Das Umschaltmodul kann so ausgelegt sein, dass es zum Umschalten der Steuereinheit vom einen auf den anderen Speicherbereich einen Zeitpunkt auswählt, zu dem sich die Windenergieanlage in einem stabilen Betriebszustand befindet. Es wird beispielsweise dann nicht zwischen den beiden Speicherbereichen umschalten, wenn die Windenergieanlage gerade hohen Windgeschwindigkeiten ausgesetzt ist und Fehler durch das Umschalten der Steuerungssoftware zu einer Überlastung der Windenergieanlage führen könnten. Vorteilhafterweise findet das Umschalten der Steuerungssoftware daher unterhalb einer vorgegebenen Windgeschwindigkeit, z.B. unterhalb der Einschaltgeschwindigkeit statt. Das Umschalten der Steuerungssoftware kann auch davon abhängig gemacht werden, dass andere Umgebungswerte innerhalb vorgegebener Grenzen liegen. Alternativ kann die Umstellung der Software automatisiert verzögert werden, bis die Windenergieanlage etwa wegen einer Flaute oder wegen eines Fehlers im elektrischen Netz keine Energie in das Anschlussnetz einspeist. Ein zusätzlicher Ausfall in der Energieerzeugung oder dem Betrieb der Windenergieanlage kann auf diese Weise vermieden werden. Der Gedanke, die Windenergieanlage während des Umschaltens auf die neue Version der Software in Betrieb zu halten, verdient gegebenenfalls unabhängig davon Schutz, ob die Kompatibilität der Steuerungssoftware mit den Betriebsparametern geprüft wurde. Dies gilt sowohl für ein entsprechendes Verfahren als auch für eine Windenergieanlage mit den zur Durchführung des Verfahrens dienlichen Komponenten.

Das Feststellen der Kompatibilität der Steuerungssoftware kann auch Element eines Verfahrens sein, mit dem die Steuerungssoftware einer Mehrzahl von Windenergieanlagen erneuert wird. Die Standardparameter einer neuen Version der Steuerungssoftware werden dann zu einem Parkmaster übertragen, an den eine Mehrzahl von Windenergieanlagen angeschlossen ist. Als Parkmaster wird jede Einrichtung bezeichnet, die Leitungsaufgaben für eine Mehrzahl von Windenergieanlagen übernimmt. Die Kompatibilität der Steuerungssoftware wird dann nacheinander oder auch parallel für die einzelnen Windenergieanlagen geprüft, wobei der Parkmaster die Windenergieanlagen zu diesem Zweck ansteuert. Bei positivem Ergebnis der Kompatibilitätsprüfung wird die neue Version der Steuerungssoftware durch den Parkmaster zu den Windenergieanlagen übertragen. Anschließend werden die Windenergieanlagen mit der neuen Version der Steuerungssoftware in Betrieb genommen.

Die Erfindung betrifft ferner eine Anordnung zum automatischen Erneuern der Steuerungssoftware einer Windenergieanlage mit den Merkmalen des Anspruchs 9.

Die Kontrolleinheit kann ferner dazu ausgelegt sein, eine neue Version der Steuerungssoftware an die Windenergieanlagen zu übertragen, wenn die Kompatibilitätsprüfung positiv ausgefallen ist. Ferner kann sie dazu ausgelegt sein, anhand der Betriebsparamter aus einer Mehrzahl von Versionen eine passende Version der Steuerungssoftware auszuwählen und auf die Windenergieanlagen zu übertragen.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine Anordnung zum Feststellen der Kompatibilität und Erneuern der Steuerungssoftware bei einer Windenergieanlage;
- Fig. 2:: eine Anordnung zum Feststellen der Kompatibilität und Erneuern der Steuerungssoftware bei einer Mehrzahl von Windenergieanlagen;
- Fig. 3:: ein Ablaufdiagramm eines Verfahrens zum Feststellen der Kompatibilität und Erneuern der Steuerungssoftware bei einer Windenergieanlage; und

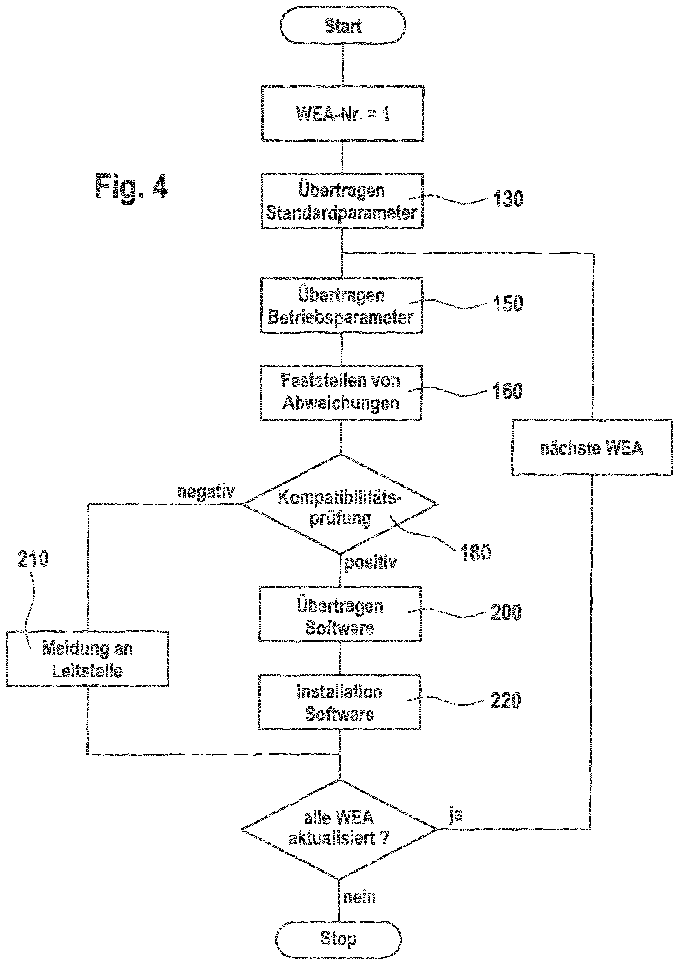

- Fig. 4:: ein Ablaufdiagramm eines Verfahrens zum Feststellen der Kompatibilität und Erneuern der Steuerungssoftware bei einer Mehrzahl von Windenergieanlagen.

Eine Windenergieanlage 20 wird mit einer Steuerungssoftware betrieben, die die Abläufe innerhalb der Windenergieanlage sowie das Zusammenspiel der Windenergieanlage mit dem Anschlussnetz steuert. Die Eigenschaften der Windenergieanlage 20 spiegeln sich in einer Vielzahl von Betriebsparametern wider. Die nachfolgende Liste gibt beispielhaft eine Auswahl von Betriebsparametern einer Windenergieanlage an:

| Typenkennung | MM92 |
|---|---|
| Seriennummer | 123456789 |
| elektrische Leistung | 2000kW |
| Rotordurchmesser | 92m |
| Getriebetyp | Typ G2 |
| Übersetzungsverhältnis | 1:120 |
| Nabenhöhe | 80m |
| Höhe über Meeresspiegel | 1080m |
| Umrichtertyp | Typ U5 |
| Nennleistung des Umrichters | 400kW |
| eingestellter Leistungsfaktor | 0, 98 |
| Typ des Controllers | Typ C3 |
| aktuelle Softwarenummer | V 3.205 |

Beim Getriebe vom Typ G2 kann das Problem bestehen, dass es bei einer bestimmten Drehzahl und einem bestimmten Drehmoment anfällig für Schwingungen ist. In der Steuerungssoftware ist dieses Problem dadurch berücksichtigt, dass die Windenergieanlage 20 bei dem betreffenden Drehmoment entweder mit einer etwas höheren oder mit einer etwas niedrigeren Drehzahl betrieben wird. Auf vergleichbare Weise sind auch die übrigen Betriebsparameter für die Eigenschaften der Windenergieanlage 20 relevant.

Die Steuerungssoftware der Windenergieanlage 20 wird laufend weiter entwickelt. Beispielsweise kann die Entwicklungsabteilung die Aufgabe haben, die Steuerungssoftware dahingehend zu überarbeiten, dass sich das Netzanschlussverhalten der Windenergieanlage leicht ändert. Der Entwicklungsabteilung ist es bekannt, dass Windenergieanlagen vom Typ MM normalerweise mit einem der Getriebetypen G1, G2, G3 oder G4 ausgerüstet sind. Da die beabsichtigte Änderung des Netzanschlussverhaltens keinen Einfluss auf das Schwingungsverhalten des Getriebes hat, kann die Entwicklungsabteilung ohne Schwierigkeiten die Aussage treffen, dass die neue Version der Steuerungssoftware mit allen Getriebetypen G1, G2, G3 und G4 kompatibel ist. Die Getriebetypen G1, G2, G3 und G4 entsprechen also Standardparametern der neuen Version der Software.

Noch weitergehend ist es bei dieser Überarbeitung der Steuerungssoftware sogar ganz ohne Belang, welcher Getriebetyp in der Windenergieanlage eingesetzt ist. Sollte also irgendwo eine einzelne Windenergieanlage vom Typ MM in Betrieb sein, die versuchsweise mit einem Getriebe G5 ausgerüstet ist, so kann die Steuerungssoftware trotzdem aufgespielt werden. Der Entwicklungsabteilung ist also bekannt, dass eine Abweichung beim Standardparameter "Getriebetyp" keinen Einfluss auf die Kompatibilität hat, und ordnet diesem Standardparameter eine entsprechende Kompatibilitätsklasse zu. Eine Möglichkeit wäre es, die Kompatibilitätsklasse 0 zu wählen, so dass die Steuerungssoftware ohne Rücksprache aufgespielt werden kann. Alternativ kommt die Kompatibilitätsklasse 1 in Betracht, in der die Steuerungssoftware ebenfalls ohne Rücksprache aufgespielt wird, in der jedoch eine Meldung an die Leitstelle erfolgt.

Eine von der Entwicklungsabteilung erstellte Liste von Standardparametern und zugehörigen Kompatibilitätsklassen könnte beispielsweise folgende Gestalt haben:

| Standardparameter | Wert | Kompklasse: |
|---|---|---|
| Typenkennung | MM92, MM82 | 3 |
| Seriennummer | 12345000 - 12345999 | 3 |
| elektrische Leistung | 1500-2500kW | 0 |
| Rotordurchmesser | 92m, 82m | 1 |
| Getriebetyp | Typ G1, G2, G3, G4 | 1 |
| Übersetzungsverhältnis | 1:120 | 0 |
| Nabenhöhe | 68-100m | 2 |
| Höhe über Meeresspiegel | 0 - 1000m | 1 |
| Umrichtertype | Typ U1, U5 | 3 |
| Nennleistung des Umrichters | 400kW | 1 |
| eingestellter Leistungsfaktor | 1-0, 90 | 0 |
| Typ des Controllers | Typ C2, C3 | 3 |
| aktuelle Softwarenummer | V 3.1 - 3.21 | 3 |

Die Kompatibilitätsklassen haben die folgende Bedeutung:

| Kompatibilitätsklasse | Bedeutung |
|---|---|
| 0 | Irrelevant für Kompatibilität |
| 1 | Irrelevant für Kompatibilität, jedoch Meldung an Leitstelle erforderlich |
| 2 | Wahrscheinlich relevant für Kompatibilität, Software kann nur mit Zustimmung der Leitstelle aufgespielt werden |
| 3 | Ausschlusskriterium, Software kann nicht aufgespielt werden |

Die Kompatibilitätsklasse wird immer dann relevant, wenn eine Abweichung zwischen Betriebsparametern und Standardparametern festgestellt wurde. Anhand der Kompatibilitätsklasse kann automatisch entschieden werden, ob die neue Version der Steuerungssoftware trotz der Abweichung aufgespielt werden kann oder welche Reaktion erforderlich ist.

In diesem Beispiel steht die Windenergieanlage 1080 m über dem Meeresspiegel, während die Steuerungssoftware für einen Standardparameterbereich von 0 m bis 1000 m ausgelegt ist. Diese Abweichung betrifft einen Standardparameter der Kompatibilitätsklasse 1. Die Steuerungssoftware kann also trotz der Abweichung ohne Rückfrage aufgespielt werden, es ist jedoch eine Meldung an die Leitstelle erforderlich.

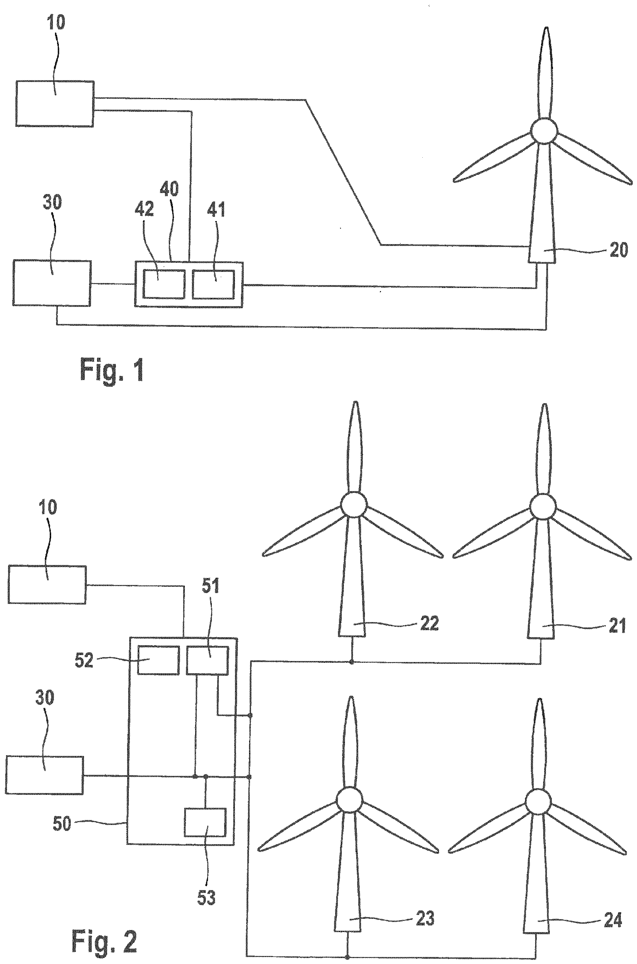

Fig. 1 zeigt eine zur Durchführung des erfindungsgemäßen Verfahrens ausgelegte Anordnung. Eine Windenergieanlage 20 ist mit einer Leitstelle 10 und mit einem Server 30 verbunden. Auf dem Server 30 ist eine neue Version der Steuerungssoftware mit den zugehörigen Standardparametern gespeichert. Es sind ferner eine Recheneinheit 41 und ein Logikmodul 42 vorgesehen, die in einer gemeinsamen Einheit 40 angeordnet sind. Die Einheit 40 ist mit der Leitstelle 10, dem Server 30 und der Windenergieanlage 20 verbunden.

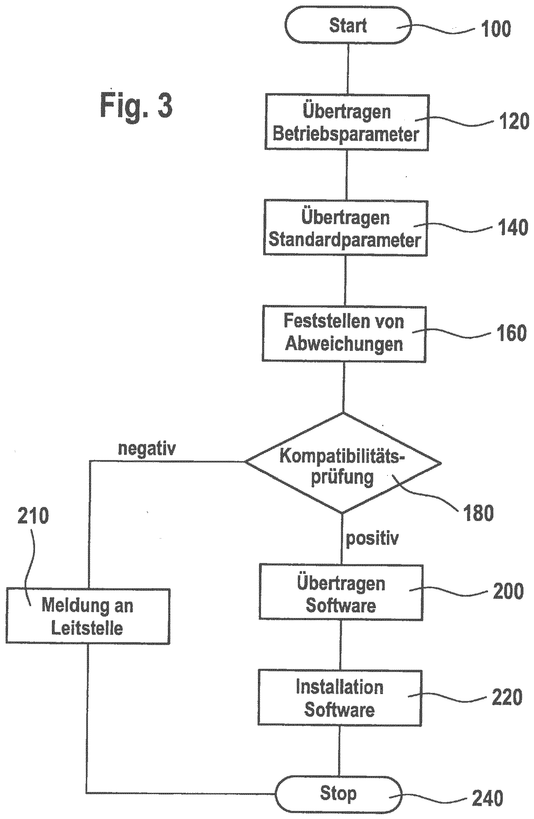

Zum Feststellen der Kompatibilität und Erneuern der Steuerungssoftware wird gemäß dem in Fig. 3 gezeigten Ablauf zunächst ein Befehl von der Leitstelle 10 an die Windenergieanlage 20 übermittelt, die Betriebsparameter zu sichern und für eine Übertragung vorzubereiten. In Schritt 120 werden daraufhin die Betriebsparameter von der Windenergieanlage 20 zu der Recheneinheit 41 übertragen. Anschließend werden in Schritt 140 die zu der neuen Version der Steuerungssoftware gehörigen Standardparameter von dem Server 30 zu der Recheneinheit 41 übertragen. Die Recheneinheit 41 vergleicht die Betriebsparameter mit den Standardparametern und stellt Abweichungen fest (Schritt 160).

Das Logikmodul 42 führt in Schritt 180 anhand der festgestellten Abweichungen eine Kompatibilitätsprüfung durch. Die Kompatibilitätsprüfung fällt positiv aus, wenn es keine Abweichung zwischen Betriebsparametern und Standardparametern gibt oder wenn zwar Abweichungen zwischen Betriebsparametern und Standardparametern festgestellt wurden, die Abweichungen aber Standardparameter der Kompatibilitätsklassen 0 oder 1 betreffen. Die neue Version der Steuerungssoftware wird in Schritt 200 zu der Windenergieanlage 20 übertragen und in Schritt 220 auf der Windenergieanlage 20 installiert. Bei einer Abweichung eines Standardparameters der Kompatibilitätsklasse 1 ergeht parallel eine Meldung an die Leitstelle. Die Windenergieanlage 20 wird mit der neuen Version der Steuerungssoftware in Betrieb genommen. Die Windenergieanlage 20 kann in Betrieb gehalten werden, während die neue Version der Software installiert wird.

Betrifft die in Schritt 160 festgestellte Abweichung einen Standardparameter der Kompatibilitätsklasse 2 oder 3, kann die neue Version der Steuerungssoftware nicht ohne weiteres aufgespielt werden. In Kompatibilitätsklasse 2 ist ein ausdrückliches Kommando von der Leitstelle 10 erforderlich, damit die Steuerungssoftware trotz der Abweichung aufgespielt werden kann. Betrifft die Abweichung einen Standardparameter der Kompatibilitätsklasse 3, so ist die Abweichung so gravierend, dass die Steuerungssoftware nicht aufgespielt werden kann.

Die Anordnung gemäß Fig. 2 ist dazu ausgelegt, bei einer Mehrzahl von Windenergieanlagen 21, 22, 23, 24 die Kompatibilität der Steuerungssoftware zu überprüfen. Es ist ein Parkmaster 50 vorgesehen, an den die Mehrzahl von Windenergieanlagen 21, 22, 23, 24 angeschlossen ist. Der Parkmaster 50 umfasst eine Recheneinheit 51, ein Logikmodul 52 und eine Kontrolleinheit 53. Auf ein Kommando der Leitstelle 10 werden in Schritt 130 die Standardparameter von dem Server 30 zu dem Parkmaster 50 übertragen. Die Kontrolleinheit 53 steuert eine erste der Windenergieanlagen 21, 22, 23, 24 an und lässt die Betriebsparameter der betreffenden Windenergieanlage, beispielsweise der Windenergieanlage 21, in Schritt 150 zu dem Parkmaster 50 übertragen. Die Recheneinheit 51 im Parkmaster 50 vergleicht die Betriebsparameter mit den Standardparametern und stellt die Abweichungen fest, Schritt 160. Führt die in Schritt 180 durchgeführte Kompatibilitätsprüfung zu einem positiven Ergebnis, wird die neue Version der Steuerungssoftware in Schritt 200 zu der Windenergieanlage 21 übertragen und in Schritt 220 auf der Windenergieanlage 21 installiert. Es ist nicht erforderlich, die Windenergieanlage 21 in dieser Zeit außer Betrieb zu setzen. Die Schritte des Überprüfens der Kompatibilität und des Erneuerns der Steuerungssoftware werden von der Kontrolleinheit 53 geleitet, ein Eingreifen von der Leitstelle 10 aus ist nicht erforderlich. Eine Meldung an die Leitstelle erfolgt in Schritt 210 lediglich dann, wenn eine Abweichung bei einem Standardparameter aus einer der Kompatibilitätsklassen 1 bis 3 festgestellt wurde.

Ist das Verfahren bei der Windenergieanlage 21 abgeschlossen, werden die entsprechenden Schritte unter der Leitung der Kontrolleinheit 53 nacheinander bei den Windenergieanlagen 22, 23, 24 durchgeführt. Das Verfahren wird abgeschlossen, wenn alle Windenergieanlagen des Windparks angesteuert wurden und entweder die neue Version der Steuerungssoftware aufgespielt ist oder die Kompatibilitätsprüfung negativ ausgefallen ist.

## Patentansprüche

1. Verfahren zum automatischen Erneuern der Steuerungssoftware einer Windenergieanlage (20), wobei die Windenergieanlage eine Steuereinheit mit einem ersten und einem vom ersten getrennten, zweiten Speicherbereich umfasst, mit den folgenden Schritten:
a. Feststellen der Kompatibilität einer neuen Version der Steuerungssoftware mit der Windenergieanlage (20) ;
b. Übertragen der neuen Version der Steuerungssoftware zu der Windenergieanlage (20) bei positivem Ergebnis der Kompatibilitätsprüfung (Schritt 200);
c. Inbetriebnehmen der Windenergieanlage (20) mit der übertragenen Steuerungssoftware (Schritt 220),
wobei die Windenergieanlage (20) in Betrieb gehalten wird, während die neue Version der Steuerungssoftware zu der Windenergieanlage (20) übertragen wird.

2. Verfahren nach Anspruch 1, **dadurch gekennzeichnet, dass** die Windenergieanlage (20) während des Umschaltens auf eine neue Version der Steuerungssoftware in Betrieb gehalten wird.

3. Verfahren nach einem der Ansprüche 1 bis 2, **dadurch gekennzeichnet, dass** das Inbetriebnehmen mit der übertragenen Steuerungssoftware (Schritt 220) verzögert wird, bis die Windgeschwindigkeit unterhalb eines vorgegebenen Grenzwerts liegt.

4. Verfahren nach einem der Ansprüche 1 bis 3, **dadurch gekennzeichnet, dass** die Windenergieanlage (20) zu einem Zeitpunkt mit der übertragenen Steuerungssoftware in Betrieb genommen wird, zu dem keine Energie in das Anschlussnetz eingespeist wird.

5. Verfahren nach einem der Ansprüche 1 bis 4, **dadurch gekennzeichnet, dass** beim Umschalten der Steuereinheit vom ersten auf den zweiten Speicherbereich ein Zeitpunkt ausgewählt wird, zu dem sich die Windenergieanlage in einem stabilen Betriebszustand befindet.

6. Verfahren nach einem der Ansprüche 1 bis 5, **dadurch gekennzeichnet, dass** die Windenergieanlage während und nach dem Umschalten überprüft wird und die Steuereinheit wieder zum ersten Speicherbereich zurückgeschaltet wird, wenn Unregelmäßigkeiten beim Betrieb mit der neuen Version der Steuerungssoftware festgestellt werden.

7. Verfahren nach Anspruch 6, **dadurch gekennzeichnet, dass** statt zurückzuschalten ein Notstopp der Windenergieanlage eingeleitet wird.

8. Verfahren nach einem der Ansprüche 1 bis 7, **gekennzeichnet durch** ein automatisches Feststellen der Kompatibilität einer für Standardparameter ausgelegten Steuerungssoftware mit einer mit Betriebsparametern betriebenen Windenergieanlage (21, 22, 23, 24), umfassend die folgenden Schritte:
a. Übertragen der Betriebsparameter der Windenergieanlage zu einer Recheneinheit (Schritt 120);
b. Übertragen der Standardparameter zu einer Recheneinheit (Schritt 140);
c. Feststellen von Abweichungen zwischen den Betriebsparametern und den Standardparametern durch die Recheneinheit (Schritt 160);
d. Entscheiden über die Kompatibilität anhand der Abweichungen (Schritt 180);
wobei vorzugsweise den Standardparametern Kompatibilitätsklassen zugeordnet werden, und bei einer Abweichung zwischen Betriebsparametern und Standardparametern anhand der Kompatibilitätsklassen über die Kompatibilität entschieden wird.

9. Anordnung zum automatischen Erneuern der Steuerungssoftware einer Windenergieanlage, **dadurch gekennzeichnet, dass** sie eine Steuereinheit für die Windenergieanlage (20) mit zwei voneinander getrennten Speicherbereichen umfasst und dass die zwei Speicherbereiche für unterschiedliche Versionen der Steuerungssoftware ausgelegt sind, wobei die Anordnung
ein Umschaltmodul umfasst und wobei das Umschaltmodul dazu ausgelegt ist, den Betrieb der Windenergieanlage (20) von einer in einem ersten Speicherbereich gespeicherten Version der Steuerungssoftware auf eine in einem zweiten Speicherbereich gespeicherten Version der Steuerungssoftware umzuschalten, wobei die Windenergieanlage (20) in Betrieb gehalten wird, während eine neue Version der Steuerungssoftware zu der Windenergieanlage (20) übertragen wird.

10. Anordnung nach Anspruch 9, **dadurch gekennzeichnet, dass** das Umschaltmodul zum instantanen Umschalten ausgebildet ist.

11. Anordnung nach Anspruch 9 oder 10, **dadurch gekennzeichnet, dass** das Umschaltmodul so ausgelegt ist, dass es zum Umschalten der Steuereinheit vom ersten auf den zweiten Speicherbereich einen Zeitpunkt auswählt, zu dem sich die Windenergieanlage in einem stabilen Betriebszustand befindet, insbesondere bis die Windgeschwindigkeit unterhalb eines vorgegebenen Grenzwerts liegt.

12. Anordnung nach einem der Ansprüche 9 bis 11, **dadurch gekennzeichnet, dass** eine separate Sicherheitseinrichtung vorgesehen ist, die dazu ausgebildet ist, die Windenergieanlage während und nach dem Umschalten zu überprüfen und die Steuereinheit wieder zum ersten Speicherbereich zurückzuschalten, wenn sie Unregelmäßigkeiten beim Betrieb mit der neuen Version der Steuerungssoftware feststellt.

13. Anordnung nach Anspruch 12, **dadurch gekennzeichnet, dass** die Sicherheitseinrichtung statt zurückzuschalten einen Notstopp der Windenergieanlage einleitet.

14. Anordnung nach einem der Ansprüche 9 bis 13, **dadurch gekennzeichnet, dass** sie ausgebildet ist zum automatischen Feststellen der Kompatibilität einer für Standardparameter ausgelegten Steuerungssoftware mit einer mit Betriebsparametern betriebenen Windenergieanlage (20), umfassend eine Recheneinheit (41, 51) zum Feststellen von Abweichungen zwischen den Betriebsparametern und den Standardparametern und ein Logikmodul (42, 52) zum Ermitteln der Kompatibilität anhand der festgestellten Abweichungen.

## Claims

1. Method for automatically updating the control software of a wind energy installation (20), wherein the wind energy installation comprises a control unit having a first storage area and a second storage area separate from the first storage area,
having the following steps of:
a. determining the compatibility of a new version of the control software with the wind energy installation (20);
b. transmitting the new version of the control software to the wind energy installation (20) in the event of a positive result of the compatibility check (step 200);
c. starting up the wind energy installation (20) with the transmitted control software (step 220),
wherein the wind energy installation (20) is kept in operation while the new version of the control software is transmitted to the wind energy installation (20) .

2. Method according to Claim 1, **characterized in that** the wind energy installation (20) is kept in operation while changing over to a new version of the control software.

3. Method according to either of Claims 1 to 2, **characterized in that** the starting-up with the transmitted control software (step 220) is delayed until the wind speed is below a predefined limit value.

4. Method according to one of Claims 1 to 3, **characterized in that** the wind energy installation (20) is started up with the transmitted control software at a time at which no energy is fed into the connecting grid system.

5. Method according to one of Claims 1 to 4, **characterized in that** a time at which the wind energy installation is in a stable operating state is selected when changing over the control unit from the first storage area to the second storage area.

6. Method according to one of Claims 1 to 5, **characterized in that** the wind energy installation is checked during and after the changeover, and the control unit is switched back to the first storage area again if irregularities are determined during operation with the new version of the control software.

7. Method according to Claim 6, **characterized in that** an emergency stop of the wind energy installation is initiated instead of switching it back.

8. Method according to one of Claims 1 to 7, **characterized by** automatic determination of the compatibility of control software designed for standard parameters with a wind energy installation (21, 22, 23, 24) operated with operating parameters, comprising the following steps of:
a. transmitting the operating parameters of the wind energy installation to a computing unit (step 120) ;
b. transmitting the standard parameters to a computing unit (step 140);
c. determining deviations between the operating parameters and the standard parameters by means of the computing unit (step 160);
d. deciding on the compatibility on the basis of the deviations (step 180);
wherein compatibility classes are preferably assigned to the standard parameters, and a decision is made on the compatibility on the basis of the compatibility classes in the event of a deviation between operating parameters and standard parameters.

9. Arrangement for automatically updating the control software of a wind energy installation, **characterized in that** it comprises a control unit for the wind energy installation (20) with two storage areas which are separate from one another, and **in that** the two storage areas are designed for different versions of the control software, wherein the arrangement
comprises a changeover module, and wherein the changeover module is designed to change over the operation of the wind energy installation (20) from a version of the control software stored in a first storage area to a version of the control software stored in a second storage area, wherein the wind energy installation (20) is kept in operation while a new version of the control software is transmitted to the wind energy installation (20).

10. Arrangement according to Claim 9, **characterized in that** the changeover module is designed for instantaneous changeover.

11. Arrangement according to Claim 9 or 10, **characterized in that** the changeover module is designed in such a manner that, in order to change over the control unit from the first storage area to the second storage area, it selects a time at which the wind energy installation is in a stable operating state, in particular until the wind speed is below a predefined limit value.

12. Arrangement according to one of Claims 9 to 11, **characterized in that** a separate safety device is provided and is designed to check the wind energy installation during and after the changeover and to switch the control unit back to the first storage area again if it determines irregularities during operation with the new version of the control software.

13. Arrangement according to Claim 12, **characterized in that** the safety device initiates an emergency stop of the wind energy installation instead of switching it back.

14. Arrangement according to one of Claims 9 to 13, **characterized in that** it is designed to automatically determine the compatibility of control software designed for standard parameters with a wind energy installation (20) operated with operating parameters, comprising a computing unit (41, 51) for determining deviations between the operating parameters and the standard parameters and a logic module (42, 52) for determining the compatibility on the basis of the determined deviations.

## Revendications

1. Procédé de renouvellement automatique du logiciel de commande d'une éolienne (20), l'éolienne comprenant une unité de commande avec une première zone de mémoire et une deuxième zone de mémoire séparée de la première, le procédé comprenant les étapes suivantes :
a. identification de la compatibilité d'une nouvelle version du logiciel de commande avec l'éolienne (20) ;
b. transfert de la nouvelle version du logiciel de commande à l'éolienne (20) en cas de résultat positif du contrôle de compatibilité (étape 200) ;
c. mise en service de l'éolienne (20) avec le logiciel de commande transféré (étape 220) ;
l'éolienne (20) étant maintenue en service pendant que la nouvelle version du logiciel de commande est transférée à l'éolienne (20).

2. Procédé selon la revendication 1, **caractérisé en ce que** l'éolienne (20) est maintenue en service pendant la commutation sur une nouvelle version du logiciel de commande.

3. Procédé selon l'une quelconque des revendications 1 et 2, **caractérisé en ce que** la mise en service avec le logiciel de commande transféré (étape 220) est retardée jusqu'à ce que la vitesse du vent soit en dessous d'une valeur limite prédéfinie.

4. Procédé selon l'une quelconque des revendications 1 à 3, **caractérisé en ce que** l'éolienne (20) est mise en service avec le logiciel de commande transféré à un instant auquel aucune énergie n'est injectée dans le réseau de raccordement.

5. Procédé selon l'une quelconque des revendications 1 à 4, **caractérisé en ce que** lors de la commutation de l'unité de commande de la première zone de mémoire à la deuxième zone de mémoire, on sélectionne un instant auquel l'éolienne se trouve dans un état de fonctionnement stable.

6. Procédé selon l'une quelconque des revendications 1 à 5, **caractérisé en ce que** l'éolienne est contrôlée pendant et après la commutation et l'unité de commande est commutée à nouveau en retour à la première zone de mémoire si l'on constate des irrégularités lors du fonctionnement avec la nouvelle version du logiciel de commande.

7. Procédé selon la revendication 6, **caractérisé en ce qu'**au lieu d'effectuer une commutation en retour, un arrêt d'urgence de l'éolienne est effectué.

8. Procédé selon l'une quelconque des revendications 1 à 7, **caractérisé par** une identification automatique de la compatibilité d'un logiciel de commande conçu pour des paramètres standard avec une éolienne (21, 22, 23, 24) fonctionnant avec des paramètres de fonctionnement, comprenant les étapes suivantes :
a. transfert des paramètres de fonctionnement de l'éolienne à un ordinateur (étape 120) ;
b. transfert des paramètres standard à un ordinateur (étape 140) ;
c. identification d'écarts entre les paramètres de fonctionnement et les paramètres standard par l'ordinateur (étape 160) ;
d. décision concernant la compatibilité à l'aide des écarts (étape 180) ;
de préférence des classes de compatibilité étant associées aux paramètres standard, et en cas d'écart entre des paramètres de fonctionnement et des paramètres standard, la compatibilité étant décidée à l'aide des classes de compatibilité.

9. Agencement de renouvellement automatique du logiciel de commande d'une éolienne, **caractérisé en ce qu'**il comprend une unité de commande pour l'éolienne (20) avec deux zones de mémoire séparées l'une de l'autre et **en ce que** les deux zones de mémoire sont conçues pour des versions différentes du logiciel de commande, l'agencement comprenant un module de commutation et le module de commutation étant conçu pour commuter le fonctionnement de l'éolienne (20) d'une version du logiciel de commande mémorisée dans une première zone de mémoire à une version du logiciel de commande mémorisée dans une deuxième zone de mémoire, l'éolienne (20) étant maintenue en fonctionnement pendant qu'une nouvelle version du logiciel de commande est transférée à l'éolienne (20).

10. Agencement selon la revendication 9, **caractérisé en ce que** le module de commutation est réalisé pour effectuer une commutation instantanée.

11. Agencement selon la revendication 9 ou 10, **caractérisé en ce que** le module de commutation est conçu, pour la commutation de l'unité de commande de la première à la deuxième zone de mémoire, pour sélectionner un instant auquel l'éolienne se trouve dans un état de fonctionnement stable, en particulier jusqu'à ce que la vitesse du vent soit en dessous d'une valeur limite prédéfinie.

12. Agencement selon l'une quelconque des revendications 9 à 11, **caractérisé en ce qu'**un dispositif de sécurité séparée est prévu, lequel est réalisé pour contrôler l'éolienne pendant et après la commutation et pour commuter en retour l'unité de commande à nouveau à la première zone de mémoire si l'on constate des irrégularités de fonctionnement avec la nouvelle version du logiciel de commande.

13. Agencement selon la revendication 12, **caractérisé en ce que** le dispositif de sécurité, au lieu d'effectuer une commutation en retour, effectue un arrêt d'urgence de l'éolienne.

14. Agencement selon l'une quelconque des revendications 9 à 13, **caractérisé en ce qu'**il est réalisé pour identifier automatiquement la compatibilité d'un logiciel de commande conçu pour des paramètres standard avec une éolienne (20) fonctionnant avec des paramètres de fonctionnement, comprenant une ordinateur (41, 51) pour identifier des écarts entre les paramètres de fonctionnement et les paramètres standard et un module logique (42, 52) pour déterminer la compatibilité à l'aide des écarts identifiés.
